# EUROPÄISCHE PATENTSCHRIFT

(11) **EP 2 072 170 B1**
(45) Veröffentlichungstag und Bekanntmachung des Hinweises auf die Patenterteilung: **22.06.2016**
(21) Anmeldenummer: 08104826.6
(22) Anmeldetag: 22.07.2008
(51) Int. Cl.: B23K 11/30

(54) **MAGAZINEINHEIT FÜR EINEN PUNKTSCHWEISSKAPPENWECHSLER FÜR EINE ROBOTER- ODER STATIONÄRE SCHWEISSEINRICHTUNG**
CARTRIDGE UNIT FOR A SPOT WELDING CAP EXCHANGER FOR A ROBOTIC OR STATIONARY SPOT WELDING DEVICE
UNITÉ DE CARTOUCHE POUR UN CHANGEUR DE CAPSULES DE SOUDAGE PAR POINTS POUR UN DISPOSITIF DE SOUDAGE ROBOTIQUE OU STATIONNAIRE

(30) Priorität: 22.12.2007 DE 202007017935 U
(43) Veröffentlichungstag der Anmeldung: 24.06.2009
(73) Patentinhaber: Kyokutoh Co., Ltd., Aichi 458-0808 (JP)
(72) Erfinder: Kaeseler, Werner, 34225, Baunatal (DE)
(74) Vertreter: Walther, Walther & Hinz GbR

(56) Entgegenhaltungen:
- WO-A-2007/012593
- DE-A1- 10 222 248
- DE-A1- 19 905 477

## Beschreibung

Die Erfindung betrifft eine Magazineinheit, umfassend mindestens ein als Magazindose ausgebildetes Magazin zur Aufnahme von Kappen eines Punktschweißkappenwechslers sowie eine Trägerplatte zur Aufnahme der Magazine und einem Magazinträger, wobei die Trägerplatte auf dem Magazinträger befestigt ist.

Im modernen Maschinen- und Fahrzeugbau werden Schweißroboter eingesetzt, die Punktschweißungen an Maschinen oder Fahrzeugteilen vornehmen. Die Elektrodenschäfte dieser Schweißapparate sind mit Schweißkappen versehen, die nach einem Verschleiß gewechselt werden müssen. Dazu sind Punktschweißkappenwechsler vorgesehen, mit deren Hilfe der Roboter die Schweißkappen auswechseln kann. Die neuen Kappen befinden sich in Magazinen, aus denen der Roboter die Kappen entnimmt.

Ein solcher Punktschweißkappenwechsler ist aus der Patentschrift DE 10 2005 035 915 B3 bekannt. Hier sind auf einer Montageplatte zwei Magazindosen befestigt, jeweils eine für den festen und eine für den beweglichen Arm, aus denen der Roboter die neuen Kappen entnimmt. Die Magazindosen und die Montageplatte sind fest mit der Trägerschiene des Wechslers verbunden. Daher kann ein neues Bestücken der Magazindosen nur am Ort, d.h. in den Schweißstationen, des Punktschweißkappenwechslers selbst erfolgen. Das bedingt einen entsprechenden Zeitaufwand zum Bestücken der Magazine und Ausfallzeiten während der Fertigung. Wenn darüber hinaus eine andere Sorte Schweißkappen wegen veränderter Schweißungen benötigt wird, die nicht in die vorhandenen Magazindosen passen, müssen die Magazindosen aufwendig von dem Magazinträger demontiert und ausgewechselt werden.

Aus der DE 199 05 477 A1 ist eine Vorrichtung zum Bereitstellen von Elektrodenkappen für Schweißelektroden von Schweißautomaten nach dem Oberbegriff des Anspruches 1 bekannt. Die Vorrichtung umfasst zwei aneinanderliegende Magazinkammern für die Schweißkappen, wobei eine der Kammern die Trägerplatte aufweist. Die Trägerplatte besitzt zwei längs und parallel zueinander verlaufende Langlöcher mit am unteren Ende angeordneten Verbreiterungen zur Aufnahme jeweils eines Schraubkopfes von Schrauben, die sich an einer Trageinheit zur Aufnahme der Trägerplatte befinden. Gelangen die Schraubenköpfe in den schmalen Teil des Langloches, ist die Trägerplatte an der Trageinheit fixiert.

Es ist daher die Aufgabe der Erfindung, eine Magazineinheit anzugeben, die eine Vorbestückung und das schnelle Auswechseln der Trägerplatte mit Magazinen auf dem Magazinträger erlaubt sowie sicherstellt, dass sich die Entnahmeöffnungen immer an einer vorgegebenen Position befinden.

Die Aufgabe wird dadurch gelöst, dass die Trägerplatte durch ein Schnellspannsystem mit einem Spannhebel auf dem Magazinträger wechselbar aufgespannt ist, wobei zur Positionierung der Trägerplatte an dem Magazinträger Führungsstifte an dem Magazinträger vorgesehen sind, die in entsprechende Löcher in der Trägerplatte eingreifen.

Vorteilhafte Ausgestaltungen der Erfindung sind in den Unteransprüchen angegeben.

Die Magazine sind zu einer Magazineinheit zusammengefasst, die sich leicht handhaben lässt. So können die Magazine an einem geeigneten Ort, unabhängig von dem Ort des Punktschweißkappenwechslers, bestückt und gelagert werden. Das Bestücken der Magazine erfolgt dann außerhalb der Stationen. Bei Bedarf wird die Magazineinheit auf dem Magazinträger schnell ausgewechselt. Der Magazinträger kann Teil des Punktschweißkappenwechslers sein, aber auch an anderer Stelle angebracht sein. Es können verschiedene Sorten von Magazineinheiten bestückt und gelagert sein, die dann entsprechend dem Bedarf aufgespannt werden.

Für eine gute Zugänglichkeit der Magazine für den Schweißroboter ist es vorteilhaft, dass die Trägerplatte für die Magazine quer zu dem Magazinträger orientiert und an ihren Enden ein oder mehrere Magazine angebracht sind. Dabei kann ein Magazin für die Kappen für den festen und eines für den beweglichen Arm eingesetzt werden. Das Magazin für obere Kappen befindet sich in diesem Fall dann unterhalb der Trägerplatte und das Magazin für untere Kappen befindet sich oberhalb der Trägerplatte. Die Entnahmeöffnungen der Magazine für die Kappen weisen jeweils in Richtung der Trägerplatte.

Die Trägerplatte ist nach der Erfindung über Führungsstifte an dem Magazinträger, die in entsprechende Löcher in der Trägerplatte eingreifen, positioniert. So befinden sich die Entnahmeöffnungen immer an einer vorgegebenen Position.

Das Auswechseln der Magazineinheit wird sehr einfach mittels eines Schnellspannsystems durchgeführt, der in der geschlossenen Position die Trägerplatte auf den Magazinträger presst und in der offenen Position die Magazineinheit freigibt. Das Schnellspannsystem kann als Schnellspannhebel ausgeführt sein.

Verschiedenartige Magazine für unterschiedliche Schweißkappen können über Löcher in der Trägerplatte kodiert werden. In diese Löcher greifen Kodierstifte auf dem Magazinträger ein. Somit können nur tatsächlich an dem jeweiligen Schweißkappenwechsler vorgesehene Magazineinheiten aufgespannt werden. Dabei bezeichnen die Kodierstifte vorteilhaft die im Magazin vorgegebenen Kappentypen.

Die Magazine sind in einer bevorzugten Ausführungsform als Magazindosen ausgeführt, die auch einfach zu wechseln sind. An der Trägerplatte befindet sich für jede Magazindose an der Entnahmeposition für die Kappen ein Anschlag, an den eine in der Magazindose befindliche Kappe federbelastet anschlägt und dort entnommen werden kann. Hinter der letzen Position für eine Kappe in der Magazindose ist ein Endstift angebracht, der bei einer leeren Magazindose an dem Anschlag anschlägt.
Die Magazindosen besitzen vorteilhafterweise außen Markierungen für die Positionen der Kappen in den Dosen. Diese sind maschinell auslesbar, um festzustellen, ob sich eine oder eine bestimmte Anzahl Kappen in der Magazindose befindet. Diese Markierungen sind vorteilhaft Metallstifte, die von einem induktiven Sensor erfasst werden können.
Wenn die Magazindose leer ist und der Endstift sich am Anschlag befindet, zeigt keine Markierung zu dem Sensor, da sich der Sensor zwischen zwei Markierungen befindet. Somit kann einfach festgestellt werden, dass die Magazindose leer ist. Die fehlende Markierung kann auch einen bestimmten Füllstand kennzeichnen, bei dem die Magazineinheit gewechselt werden muss.

Das gleiche Wechselsystem kann für einen Kappenwechsler an Robotern sowie an festen stationären Schweißeinrichtungen in allen Positionen, d.h. vertikal und horizontal eingesetzt werden. Dieses bietet die Möglichkeit, die günstigste und damit am besten zugängliche Anordnung des Systems in den einzelnen Schweißstationen bezogen auf deren Platzverhältnisse zu realisieren.

Das integrierte Bausystem von Wechslern und Magazinen bietet den vorteilhaften Einsatz für stationäre Anlagen, da es sinnvoll fest am Greifersystem oder wechselbar am Roboter eingebaut werden kann und somit eine gute Zugängigkeit und einen schnellen Wechsel der Kappen ermöglicht.
Außerdem ist von Vorteil, dass das gleiche System bei Roboter und stationären Anlagen eingesetzt werden kann, das bedeutet für den Produktionsbetrieb einen geringeren Aufwand an Bevorratung von Ersatzteilen und somit niedrigere Kosten in der Lagerhaltung.

In den Figuren ist eine Ausführungsform beispielhaft dargestellt.
Fig. 1 zeigt eine Aufsicht auf eine aufgespannte Magazineinheit.
Fig. 2 zeigt perspektivisch eine Magazineinheit auf einem Magazinträger.

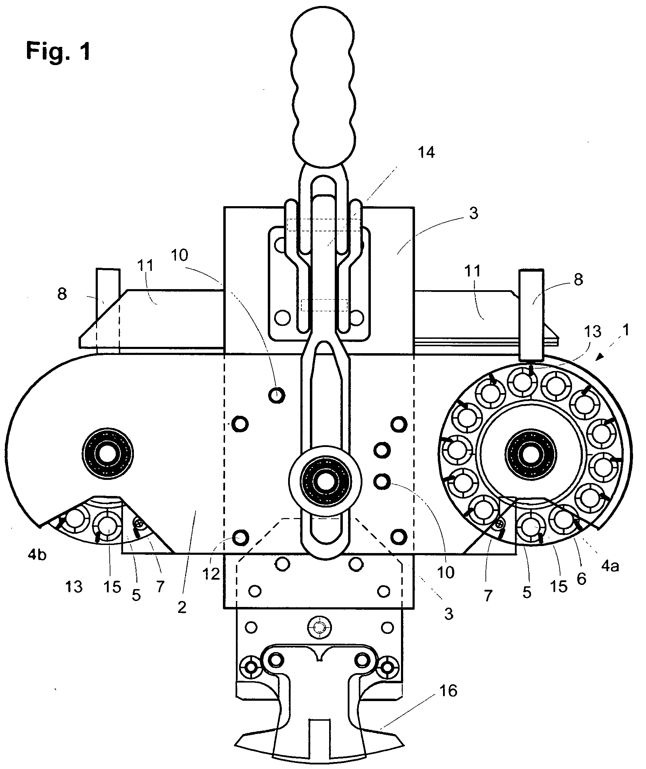

In Fig. 1 ist eine Magazineinheit 1 dargestellt, die auf einem Magazinträger 3 mittels des Spannhebels 14 aufgespannt ist. An dem Magazinträger 3 ist auch der Kappenabzicher 16 mit seinen Backen dargestellt.
Die Magazineinheit 1 besteht aus der Trägerplatte 2, und den beiden Magazindosen 4, die jeweils am Ende angebracht sind. Dabei befindet sich die eine Magazindose 4 unterhalb der Trägerplatte 2 und die andere Magazindose 4 oberhalb. Durch Aussparungen in der Trägerplatte 2 ist jeweils eine Kappe 15 zur Entnahme aus der Magazindose 4 zugänglich. Diese Kappe 15 schlägt an den Anschlag 7 an. Für jede Kappenaufnahme 6 ist eine Markierung 13 in Form eines Metallstiftes an der gegenüberliegenden Seite der Magazindose 4 vorgesehen, die mittels eines Sensors 8 oder Signalgebers detektiert werden kann, der mit dem Halteblech 11 an dem Magazinträger 3 angebracht ist. Befindet sich keine Kappe 15 mehr in der Magazindose 4, schlägt der Endstift 7 an den Anschlag 5 an. Bei dieser Stellung befindet sich keine Markierung 13 vur dem Sensor 8 und so kann detektiert werden, dass die Magazindose 4 leer ist oder einen bestimmten Füllstand erreicht hat.
Die Magazineinheit 1 ist mittels der Zentrierlöcher 12 auf dem Magazinträger 3 positioniert. Mittels zusätzlicher Kodierlöchcr 10 kann die Art der Kappen kodiert werden. Dazu befinden sich auf dem Magazinträger 3 entsprechende Stifte, die in diese Kodierlöcher 10 eingreifen.

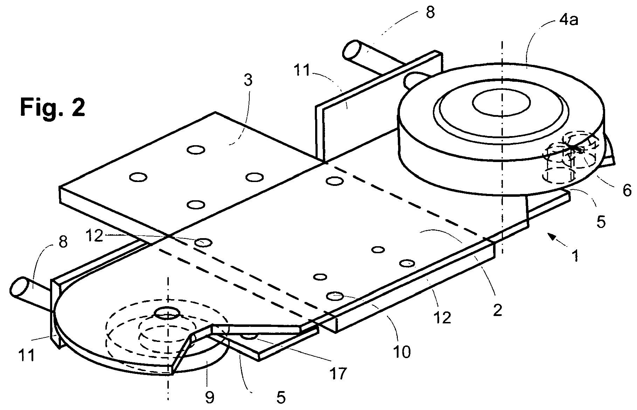

In Fig. 2 ist perspektivisch die Magazineinheit 1 auf dem Magazinträger 3 ohne Spannhebel und ohne Auszieher dargestellt. Hier ist nur die obere Magazindose 4 mit den Kappenaufnahmen 6 bestückt, für die untere ist eine Dosenaufnahme 9 vorgesehen. Die Trägerplatte 2 ist auf dem Magazinträger 3 mittels der Zentrierlöcher 12 und der Kodierlöcher 10 positioniert.

Die Sensoren 8 sind mittels der Haltebleche 11 an dem Magazinträger 3 befestigt.
Ab den Entnahmepositionen für die Kappen sind in den Aussparungen der Trägerplatte 2 die Anschläge 5 angebracht. Die Anschlagbleche 5 besitzen auch eine Aussparung 17 für die nicht dargestellten Endstifte 7. Hier befindet sich der Endstift, wenn die Magazindose voll mit Kappen bestückt ist.

### Bezugszeichen

- 1: Magazineinheit
- 2: Trägerplatte
- 3: Magazinträger
- 4: Magazindose
- 5: Anschlag
- 6: Aufnahme für eine Kappe
- 7: Endstift
- 8: Sensor
- 9: Aufnahme für eine Magazindose
- 10: Kodierloch
- 11: Halteblech für einen Sensor
- 12: Zentrierloch
- 13: Markierstift
- 14: Spannhebel
- 15: Kappe
- 16: Auszieher mit Backen
- 17: Aussparung für den Endstift

## Patentansprüche

1. Magazineinheit, umfassend mindestens ein als Magazindose ausgebildetes Magazin (4) zur Aufnahme von Kappen eines Punktschweißkappenwechslers sowie eine Trägerplatte (2) zur Aufnahme der Magazine und einem Magazinträger (3), wobei die Trägerplatte auf dem Magazinträger (3) befestigt ist, **dadurch gekennzeichnet, dass** die Trägerplatte (2) durch ein Schnellspannsystem mit einem Spannhebel (14) auf dem Magazinträger (3) wechselbar aufgespannt ist,
wobei zur Positionierung der Trägerplatte (2) an dem Magazinträger (3) Führungsstifte an dem Magazinträger (3) vorgesehen sind, die in entsprechende Löcher in der Trägerplatte (2) eingreifen

2. Magazineinheit nach Anspruch 1, **dadurch gekennzeichnet, dass** die Trägerplatte (2) quer zum Magazinträger (3) orientiert ist.

3. Magazineinheit nach Anspruch 1 oder 2, **dadurch gekennzeichnet, dass** ein Magazin (4b) für obere Kappen und ein Magazin (4a) für untere Kappen vorgesehen ist.

4. Magazineinheit nach Anspruch 3, **dadurch gekennzeichnet, dass** sich das Magazin (4b) für obere Kappen unterhalb der Trägerplatte (2), das Magazin (4a) für untere Kappen oberhalb der Trägerplatte (2) befindet.

5. Magazineinheit nach einem der voranstehenden Ansprüche, **dadurch gekennzeichnet, dass** die Trägerplatte (2) mit dem Schnellspannsystem (14) auf den Magazinträger (3) gepresst ist.

6. Magazineinheit nach einem der voranstehenden Ansprüche, **dadurch gekennzeichnet, dass** die Trägerplatte (2) mit Kodierlöchern (10) versehen ist, in die entsprechende Kodierstifte auf dem Magazinträger (3) eingreifen.

7. Magazineinheit nach Anspruch 6, **dadurch gekennzeichnet, dass** die Kodierstifte eine Kappentype kennzeichnen.

8. Magazineinheit nach einem der voranstehenden Ansprüche, **dadurch gekennzeichnet, dass** die Trägerplatte (2) für jede Magazindose an einer jeweiligen Entnahmeposition einen Anschlag (5) besitzt, an den eine in die Magazindose eingesteckte Kappe (15) federbelastet anschlägt.

9. Magazineinheit nach Anspruch 8, **dadurch gekennzeichnet, dass** sich in der Magazindose hinter der letzten Kappenposition ein Endstift befindet, der bei leerer Magazindose an den Anschlag anschlägt.

10. Magazineinheit nach einem der voranstehenden Ansprüche, **dadurch gekennzeichnet, dass** für jede Kappenposition in der Magazindose außen eine durch einen Sensor (8) lesbare Markierung (13) angebracht ist,.

11. Magazineinheit nach Ansprüch 10, **dadurch gekennzeichnet, dass** bei einer leeren Magazindose sich keine Markierung (13) direkt vor dem Sensor (8) befindet.

12. Magazineinheit nach Anspruch 10 oder 11, **dadurch gekennzeichnet, dass** die Markierung (13) einen bestimmten Füllstand kennzeichnet.

13. Magazineinheit nach einem der Ansprüche 10 oder 11, **dadurch gekennzeichnet, dass** die Markierung (13) ein Metallstift ist und der Sensor (8) ein induktiver Sensor ist.

## Claims

1. A magazine unit comprising at least one magazine (4) configured as a magazine box for receiving caps of a spot welding cap changer, as well as a support plate (2) for receiving the magazine and a magazine support (3), wherein the support plate is fastened on the magazine support (3), **characterized in that** the support plate (2) is changeably clamped on the magazine support (3) by means of a rapid clamping system with a clamping lever (14),
wherein guide pins, which engage with corresponding holes in the support plate (2), are provided at the magazine support (3) for positioning the support plate (2) at the magazine support (3).

2. The magazine unit according to claim 1, **characterized in that** the support plate (2) is oriented transversely to the magazine support (3).

3. The magazine unit according to claim 1 or 2, **characterized in that** a magazine (4b) for top caps and a magazine (4a) for bottom caps are provided.

4. The magazine unit according to claim 3, **characterized in that** the magazine (4b) for top caps is located underneath the support plate (2) and the magazine (4a) for bottom caps is located above the support plate (2).

5. The magazine unit according to one of the afore-mentioned claims, **characterized in that** the support plate (2) is pressed with the rapid clamping system onto the magazine support (3).

6. The magazine unit according to one of the afore-mentioned claims, **characterized in that** the support plate (2) is equipped with coding holes (10) with which corresponding coding pins on the magazine support (3) engage.

7. The magazine unit according to claim 6, **characterized in that** the coding pins represent a cap type.

8. The magazine unit according to one of the afore-mentioned claims, **characterized in that** for each magazine box, the support plate (2) features a limit-stop (5) in a respective discharging position, against which a cap (15) inserted in the magazine box abuts under the load of a spring.

9. The magazine unit according to claim 8, **characterized in that** an end pin, which abuts against the limit-stop when the magazine box is empty, is located in the magazine box behind the last cap position.

10. The magazine unit according to one of the afore-mentioned claims, **characterized in that** for each cap position in the magazine box, a marker (13), which is readable by a sensor (8), is attached on the outside.

11. The magazine unit according to claim 10, **characterized in that** when the magazine box is empty, there is no marker (13) directly in front of the sensor (8).

12. The magazine unit according to claim 10 or 11, **characterized in that** the marker (13) represents a certain filling level.

13. The magazine unit according to one of the claims 10 or 11, **characterized in that** the marking (13) is a metal pin and the sensor (9) is an inductive sensor

## Revendications

1. Unité de chargeur comprenant au moins un chargeur (4) sous forme de boîte de chargeur destinée à recevoir des capsules d'un changeur de capsules de soudage par point, ainsi qu'une plaque de support (2) destinée à recevoir les chargeurs et un support de chargeur (3), où la plaque de support est fixée sur le support de chargeur (3), **caractérisée en ce que** la plaque de support (2) est serrée de manière échangeable sur le support de chargeur (3) au moyen d'un système de serrage rapide avec un levier de serrage (14),
où des broches de guidage qui s'engagent dans des trous correspondants dans la plaque de support (2) sont prévues au niveau du support de chargeur (3) en vue de positionner la plaque de support (2) au niveau du support de chargeur (3).

2. Unité de chargeur selon la revendication 1, **caractérisée en ce que** la plaque de support (2) est orientée transversalement au support de chargeur (3).

3. Unité de chargeur selon la revendication 1 ou 2, **caractérisée en ce que** sont prévus un chargeur (4b) pour des capsules supérieures et un chargeur (4b) pour des capsules inférieures.

4. Unité de chargeur selon la revendication 3, **caractérisée en ce que** le chargeur (4b) pour des capsules supérieures se trouve sous la plaque de support (2) et le chargeur (4a) pour des capsules inférieures se trouve sur la plaque de support (2).

5. Unité de chargeur selon l'une quelconque des revendications précédentes, **caractérisée en ce que** la plaque de support (2) est pressée avec le système de serrage rapide sur le support de chargeur (3).

6. Unité de chargeur selon l'une quelconque des revendications précédentes, **caractérisée en ce que** la plaque de support (2) est pourvue de trous de codage (10) dans lesquels s'engagent des broches de codage situées sur le support de chargeur (3).

7. Unité de chargeur selon la revendication 6, **caractérisée en ce que** les broches de codage représentent un type de capsule.

8. Unité de chargeur selon l'une quelconque des revendications précédentes, **caractérisée en ce que** pour chaque boîte de chargeur, la plaque de support (2) présente en une position de prélèvement respective une butée (5) contre laquelle une capsule (15) insérée dans la boîte de chargeur bute sous la contrainte d'un ressort.

9. Unité de chargeur selon la revendication 8, **caractérisée en ce que** derrière la dernière position de capsule de la boîte de chargeur se trouve une broche d'extrémité qui bute contre la butée lorsque la boîte de chargeur est vide.

10. Unité de chargeur selon l'une quelconque des revendications précédente, **caractérisée en ce que** pour chaque position de capsule dans la boîte de chargeur, un marquage (13) lisible par un capteur (8) est fixé à l'extérieur.

11. Unité de chargeur selon la revendication 10, **caractérisée en ce que** lorsque la boîte de chargeur est vide, aucun marquage (13) ne se trouve directement devant le capteur (8).

12. Unité de chargeur selon la revendication 10 ou 11, **caractérisée en ce que** le marquage (13) représente un certain niveau de remplissage.

13. Unité de chargeur selon l'une des revendications 10 ou 11, **caractérisé en ce que** le marquage (13) est une broche métallique et que le capteur (8) est un capteur inductif.
